(19) **Europäisches Patentamt / European Patent Office / Office européen des brevets**

(11) **EP 4 135 994 B1**

(12) **FASCICULE DE BREVET EUROPEEN**

(45) Date de publication et mention de la délivrance du brevet:
**26.02.2025 Bulletin 2025/09**

(21) Numéro de dépôt: **21715259.4**

(22) Date de dépôt: **30.03.2021**

(51) Classification Internationale des Brevets (IPC):
**B60L 15/20** *(2006.01)*    **B60T 8/173** *(2006.01)*
**B60T 8/176** *(2006.01)*    **B60W 30/18** *(2012.01)*
**B60W 20/15** *(2016.01)*    **B60W 30/184** *(2012.01)*
**B60W 30/20** *(2006.01)*

(52) Classification Coopérative des Brevets (CPC):
**B60L 7/14; B60L 15/2009; B60T 8/173;**
**B60W 30/18109; B60W 30/184; B60W 30/20;**
B60L 2240/421; B60L 2240/423; B60L 2240/461;
B60L 2240/465; B60T 2270/10; Y02T 10/64;
Y02T 10/72

(86) Numéro de dépôt international:
**PCT/EP2021/058228**

(87) Numéro de publication internationale:
**WO 2021/209254 (21.10.2021 Gazette 2021/42)**

(54) **DISPOSITIF ET UN PROCÉDÉ DE FREINAGE D'UN VÉHICULE AUTOMOBILE DOTÉ D'UNE MACHINE ÉLECTRIQUE**

VORRICHTUNG UND VERFAHREN ZUM BREMSEN EINES KRAFTFAHRZEUGS MIT EINER ELEKTRISCHEN MASCHINE

DEVICE AND METHOD FOR BRAKING A MOTOR VEHICLE WITH AN ELECTRIC MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.04.2020 FR 2003787**

(43) Date de publication de la demande:
**22.02.2023 Bulletin 2023/08**

(73) Titulaire: **Ampere SAS**
**92100 Boulogne-Billancourt (FR)**

(72) Inventeurs:
• **BEISBARDT, Olivier**
  **91470 Forge les bains (FR)**
• **DEVELAY, Christophe**
  **75012 PARIS (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**US-A1- 2006 025 905    US-A1- 2012 262 102**

**Description**

La présente demande concerne un dispositif et un procédé de freinage d'un véhicule automobile doté d'une machine électrique.

Les véhicules automobiles à propulsion électrique pure et à propulsion hybride électrique sont dotés d'une machine électrique d'entraînement. La plupart du temps, de tels véhicules sont aussi dotés d'un système d'antiblocage des roues, également connu sous la dénomination anglo-saxonne « Antilock Braking System » ou sous l'acronyme correspondant « ABS ».

Un système ABS est un système d'assistance limitant le blocage des roues pendant les périodes de freinage intense. Plus particulièrement, lors d'un freinage, la voiture décélère car on applique à la roue un couple de freinage. Ce couple fait perdre de la vitesse à la roue, ce qui se traduit par une baisse de la vitesse du véhicule. Le taux de glissement tx lié à la roue est défini comme la différence de la vitesse $V_{roue}$ linéaire de la roue par la vitesse $V_{veh}$ du véhicule, que l'on divise par la vitesse $V_{veh}$ :

[Math 1]

$$tx = \frac{V_{roue} - V_{veh}}{V_{veh}}$$

De manière conventionnelle, un système ABS régule le taux de glissement tx pour le maintenir dans une plage optimale en agissant sur le couple de frein appliqué à la roue. La fréquence de cette régulation est contrainte par l'électronique du système ABS, l'hydraulique et la mécanique. Elle amène à des fréquences d'action de régulation comprises entre 5 Hz et 8 Hz.

Lorsqu'un système ABS est utilisé dans un véhicule à propulsion électrique ou à propulsion hybride électrique, il se produit des oscillations de torsion de la chaîne cinématique entre les roues et la machine électrique lors des freinages d'urgence. En particulier, il arrive que les oscillations de la vitesse de rotation de la roue dues à la régulation par le système ABS excitent la chaîne cinématique à sa fréquence propre. Il en résulte des débattements importants du groupe motopropulseur sur ses suspensions, qui peuvent conduire à la rupture de biellettes, d'éléments de suspension du groupe motopropulseur ou encore d'éléments de chaîne cinématique comme les arbres de boîte de vitesses ou les transmissions.

US 2006/025905 A1 divulgue un système et une méthode d'amortissement actif du moteur qui permet d'atténuer les oscillations de la chaîne cinématique d'un véhicule à moteur lors d'un fonctionnement de l'ABS.

US 2012/262102 A1 divulgue une méthode pour amortir les oscillations d'une chaîne cinématique dans un véhicule.

Au vu de ce qui précède, l'invention a pour but de limiter les oscillations de torsion de chaîne cinématique remontant depuis les roues lors des freinages d'urgence.

A cet effet, il est proposé un dispositif de freinage d'un véhicule automobile doté d'une machine électrique, comprenant un premier moyen d'actionnement apte à appliquer un couple de freinage sur au moins une roue du véhicule et un module de régulation d'un taux de glissement lié à ladite roue.

Selon l'invention, ce dispositif comprend un module de détermination apte à déterminer un signal de correction d'un déphasage entre des oscillations de la vitesse de rotation de ladite roue et des oscillations de la vitesse de rotation de la machine électrique et un second moyen d'actionnement apte à piloter la machine électrique avec le signal de correction.

En corrigeant ainsi le déphasage, on évite une excitation de la chaine cinématique entre la roue et la machine électrique et on limite le risque de casse d'un élément de suspension, du groupe motopropulseur ou d'un autre élément mécanique.

De préférence, le signal de correction est un couple de correction devant être délivré par la machine électrique.

On peut en outre prévoir que le couple de correction est positif lorsque le couple de freinage est négatif.

Un tel couple de correction permet d'accélérer la machine électrique et, de ce fait, que la machine électrique rattrape son retard de phase par rapport à la roue lorsque celle-ci est freinée.

Avantageusement, le couple de correction est proportionnel au couple de freinage.

Dans un mode de réalisation, un coefficient de proportionnalité liant le couple de freinage et le couple de correction est égal à l'opposé d'un rapport de transmission mécanique entre la machine électrique et ladite roue.

On peut en outre prévoir que le module de détermination soit configuré pour délivrer un couple de correction nul ou convergeant vers zéro (0) lorsqu'aucune régulation du taux de glissement lié à ladite roue est mise en œuvre par le module de régulation.

On peut également prévoir que le module de détermination soit configuré pour délivrer un couple de correction nul ou convergeant vers zéro (0) lorsque le taux de glissement lié à ladite roue est inférieur à un seuil compris entre 10 % et 15 %.

Une telle configuration du module de détermination permet de mettre en œuvre la correction seulement lorsque la régulation est susceptible d'être active.

De préférence, le signal de correction est calculé comme une fonction d'une dérivée seconde temporelle d'une position angulaire de la machine électrique.

Avantageusement, le signal de correction est proportionnel à au moins un paramètre choisi parmi un moment d'inertie équivalent d'un ensemble constitué par la machine électrique et par des éléments de chaine cinématique entre la machine électrique et ladite roue, et une dérivée seconde temporelle d'une position angulaire de la machine électrique.

Un tel calcul permet d'obtenir un couple dimensionné pour rattraper le retard de phase entre la machine électrique et la roue.

Selon un autre aspect, il est proposé un ensemble de propulsion et freinage pour véhicule automobile comprenant une machine électrique et un dispositif de freinage tel que défini précédemment.

Dans un mode de réalisation, l'ensemble comprend une boîte de vitesses mécaniquement connectée avec la machine électrique.

De préférence, l'ensemble comprend un moteur à combustion interne mécaniquement connecté à la boîte de vitesses.

Selon l'invention, il est proposé un procédé de freinage d'un véhicule automobile doté d'une machine électrique, comprenant l'application d'un couple de freinage sur au moins une roue du véhicule et la régulation d'un taux de glissement lié à ladite roue.

Selon une de ses caractéristiques générales, ce procédé comprend la détermination d'un signal de correction d'un déphasage entre des oscillations de la vitesse de rotation de ladite roue et des oscillations de la vitesse de rotation de la machine électrique et le pilotage de la machine électrique avec le signal de correction.

De préférence, on diminue un couple de la machine électrique lorsque le module de régulation diminue le couple de freinage sur ladite roue, et/ou on augmente un couple de la machine électrique lorsque le module de régulation augmente le couple de freinage sur ladite roue.

Selon encore un autre aspect, il est proposé un programme d'ordinateur comprenant un code configuré pour, lorsqu'il est exécuté par un processeur ou une unité de contrôle électronique, mettre en œuvre le procédé tel que défini précédemment.

D'autres buts, caractéristiques et avantages de l'invention apparaîtront à la lecture de la description suivante, donnée uniquement à titre d'exemple non limitatif, et faite en référence aux dessins annexés sur lesquels :

[Fig 1] représente schématiquement un ensemble de propulsion et freinage selon un premier mode de réalisation de l'invention,

[Fig 2] représente schématiquement un dispositif de freinage incorporé dans l'ensemble de la figure 1,

[Fig3] est un graphe temporel des vitesses de rotation des roues et de la machine électrique d'un groupe motopropulseur de l'ensemble de la figure 1.

[Fig 4] est un graphe temporel du couple de freinage et du couple de régulation dans l'ensemble de la figure 1.

[Fig 5A], [Fig 5B] et [Fig 5C] sont des graphes temporels montrant les oscillations de la chaîne cinématique lors d'un freinage intense respectivement sans mise en œuvre d'une correction, avec débrayage virtuel de la machine électrique et avec mise en œuvre d'une correction,

[Fig 6] illustre un ensemble de propulsion et freinage selon un deuxième mode de réalisation de l'invention, et

[Fig 7] illustres un ensemble de propulsion et freinage selon un troisième mode de réalisation de l'invention.

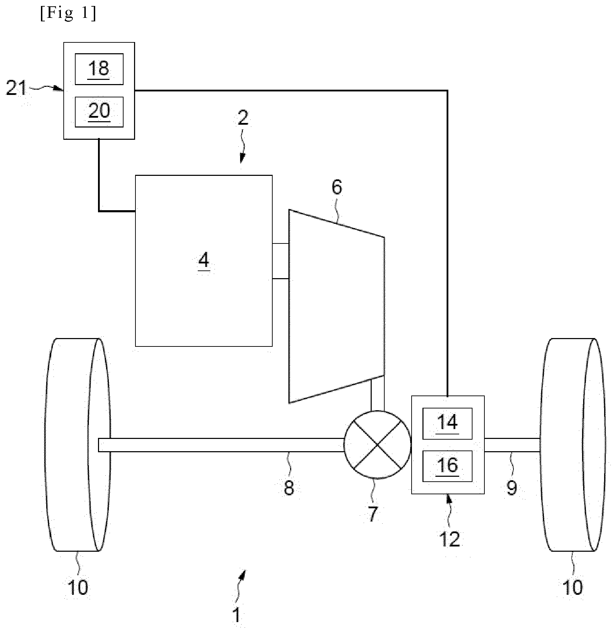

En référence à la figure 1, on a schématiquement représenté un ensemble de propulsion et freinage 1 selon un premier mode de réalisation de l'invention. L'ensemble 1 est destiné à être incorporé dans un véhicule automobile.

L'ensemble 1 comprend un groupe motopropulseur 2. Le groupe motopropulseur 2 a pour fonction d'assurer la propulsion du véhicule automobile. En l'espèce, comme cela sera expliqué par la suite, le véhicule automobile est à propulsion électrique pure. Un véhicule à propulsion électrique pure est un véhicule dont la propulsion est assurée exclusivement par une machine électrique.

Le groupe motopropulseur 2 comporte une machine électrique 4, une boîte de vitesses 6 et un différentiel 7. La machine électrique 4 a pour fonction de délivrer une puissance mécanique transmise par la boîte de vitesses 6 et le différentiel 7 à des arbres 8 et 9 respectivement solidaires de deux roues motrices 10 du véhicule.

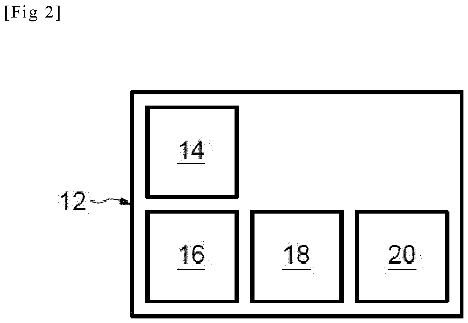

L'ensemble 1 comporte un dispositif de freinage 12. Le dispositif 12 a pour fonction de freiner les roues 10 lorsque les utilisateurs du véhicule souhaitent que le véhicule ralentisse. Le dispositif de freinage 12 est représenté en détail sur la figure 2.

Le dispositif de freinage 12 comprend un moyen d'actionnement 14 capable d'appliquer un couple de freinage $T_{freinage}$ sur les roues 12. Par exemple, le moyen d'actionnement 14 peut comprendre deux disques de frein (non représentés) respectivement solidaires des arbres 8 et 9 et deux étriers (non représentés) respectivement capables d'exercer un effort de frottement sur les disques de frein.

Le dispositif de freinage 12 comporte un module de régulation 16. Le module de régulation 16 a pour fonction d'empêcher le blocage des roues 10 lors d'un freinage intense. A cet égard, le module de régulation 16 est configuré pour réguler le taux de glissement tx lié à chacune des roues 10, où le taux de glissement tx est calculé selon l'équation ci-dessous :

[Math 2]

$$tx = \frac{V_{roue} - V_{veh}}{V_{veh}}$$

où $V_{roue}$ est la vitesse linéaire de la roue 10 concernée et $V_{veh}$ est la vitesse du véhicule.

Dans l'exemple illustré, le module de régulation 16 est configuré pour que le taux de glissement lié à chacune des roues 10 reste compris dans une plage située entre 10 % et 15 %. Sans sortir du cadre de l'invention, on peut envisager de remplacer le module de régulation 16 par tout autre dispositif antiblocage des roues.

Le dispositif de freinage 12 comporte un module de détermination 18. Le module de détermination 18 a pour fonction de déterminer une manière de corriger un déphasage entre des oscillations la vitesse de rotation $\omega_{roue}$ de chacune des roues 10 et les oscillations de la vitesse de rotation $\omega_{me}$ de la machine électrique 4. De la sorte, le module de détermination 18 détermine comment limiter les oscillations de torsion de la chaîne cinématique entre les roues 10 et la machine électrique 4. A cet égard, le module de détermination 18 détermine un signal de correction, en l'espèce un couple de correction $T_{corr}$, devant être généré par la machine électrique 4.

Le dispositif 12 comporte un moyen d'actionnement 20. Le moyen d'actionnement 20 est capable de piloter la machine électrique 4 en tenant compte du signal $T_{corr}$ déterminé par le module de détermination 18.

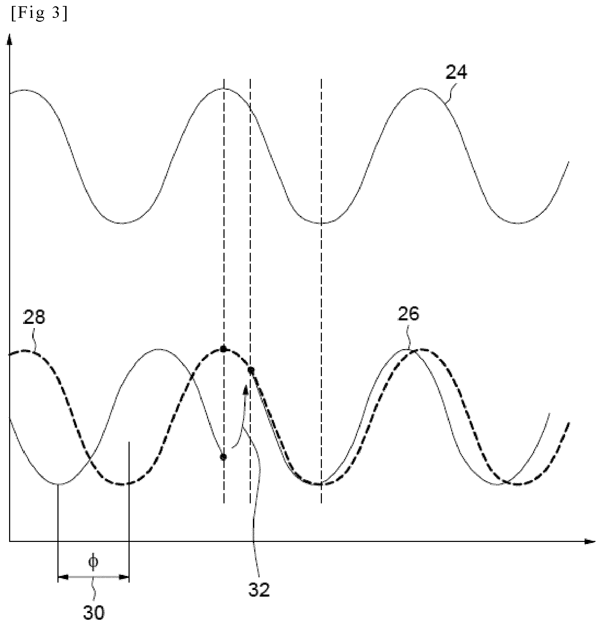

En référence à la figure 3, le graphe temporel de la vitesse de rotation $\omega_{roue}$ est représenté par une courbe 24 et le graphe temporel de la vitesse de rotation $\omega_{me}$ est représenté par une courbe 26. La reproduction de la courbe 24 à la hauteur de la courbe 26 par la courbe en pointillés 28 montre la présence d'un déphasage 30 à l'origine des oscillations de torsion de la chaîne cinématique.

Au cours d'un intervalle schématiquement représenté par la flèche 32, on exerce le couple positif $T_{corr}$ sur la machine électrique 4 pour augmenter la vitesse de rotation $\omega_{me}$. Dans l'intervalle correspondant à la flèche 32, le couple de freinage $T_{freinage}$ appliqué sur les roues 10 a pour conséquence que la vitesse de rotation $\omega_{roue}$ diminue. Ce faisant, on réduit le déphasage entre les courbes 24 et 26.

Ainsi, en exerçant le couple $T_{corr}$ strictement positif sur la machine électrique 4 alors que la vitesse de rotation $\omega_{roue}$ décroît, on réduit le déphasage. En d'autres termes, pour réduire le déphasage entre les courbes 24 et 26, il convient d'appliquer un couple de correction $T_{corr}$ par la machine électrique 4 strictement positif lorsqu'un couple de freinage $T_{freinage}$ négatif est appliqué aux roues 10.

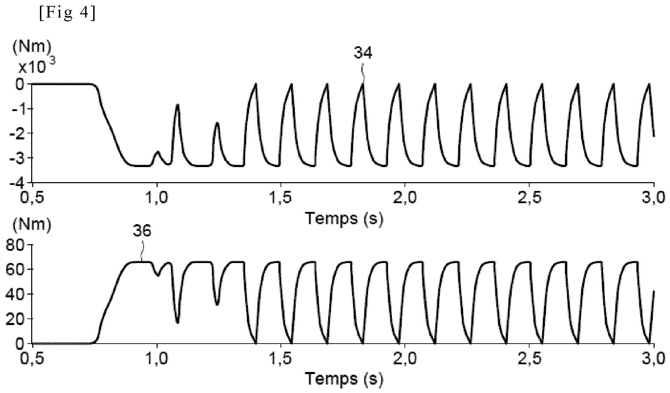

Plus précisément, en référence à la figure 4, on a schématiquement représenté un graphe temporel de l'évolution du couple de freinage $T_{freinage}$ sur les roues 10 par la courbe 34, et l'évolution temporelle du couple de correction $T_{corr}$ délivré par la machine électrique 4 avec la courbe 36. Le couple $T_{freinage}$ étant un couple de freinage, il ne peut qu'être négatif.

Au vu de la figure 4, le couple de correction $T_{corr}$ est sensiblement proportionnel et de signe opposé au couple de freinage $T_{freinage}$. Plus particulièrement, le coefficient de proportionnalité k entre le couple de correction $T_{corr}$ et le couple de freinage $T_{freinage}$ est égal à l'opposé du rapport de la transmission mécanique entre la machine électrique 4 et les roues 10 :

[Math 3]

$$T_{corr} = -k \times T_{freinage}$$

Dans la présente demande, l'expression « sensiblement proportionnel » signifie que, quel que soit un couple de freinage T strictement négatif, l'écart entre le couple de correction $T_{corr}(T)$ correspondant au couple T et le produit du couple T par le coefficient -k est inférieur à +/-5 % du produit du couple T par le coefficient-k :

[Math 4]

$$\forall T < 0, -k \times 0{,}95 \times T \leq T_{corr}(T) \leq -k \times 1{,}05 \times T$$

Dans l'exemple illustré, on considère que le couple de freinage $T_{freinage}$ est identique pour les deux roues 10 et on utilise, en vue de la correction selon l'invention, une valeur mesurée sur l'une des deux roues 10, en l'espèce la roue 10 montée sur l'arbre 9. On peut toutefois, sans sortir du cadre de l'invention, envisager une autre détermination du couple de freinage T$_{freinage}$. Par exemple, on peut considérer séparément le couple de freinage T$_{freinage}$ de chacune des roues 10, ou encore considérer le couple de freinage T$_{freinage}$ comme la moyenne des couples respectivement liés à chacune des roues 10. Il en est de même pour les taux de glissement tx lié aux roues 10.

Toujours en référence aux figures 3 et 4, quelle que soit une période d'oscillation de la vitesse de rotation ω$_{roue}$, on met en œuvre le procédé suivant.

A un instant initial, le taux de glissement tx lié aux roues 10 se trouve inférieur à la valeur seuil de 15 %. Le module de régulation 16 est donc inactif. En résultat, le moyen d'actionnement 14 applique un couple résistant sur l'essieu 8 égal à ou convergeant vers le couple T$_{freinage\_max}$.

A un moment, le taux de glissement tx dépasse la valeur seuil de 15 %. Le module 16 met en œuvre une régulation du taux de glissement qui se traduit par une diminution progressive du couple T$_{freinage}$ jusqu'à zéro (0). Dans le même temps, le couple T$_{corr}$ devant être appliqué par la machine électrique 4 diminue progressivement jusqu'à zéro (0).

Ensuite, le taux de glissement tx régulé devient inférieur à la valeur seuil de 10 %. En résultat, il est mis fin à la régulation mise en œuvre par le module 16. Le moyen d'actionnement 14 applique progressivement le couple T$_{freinage}$ convergeant vers le couple T$_{freinage\_max}$. Dans le même temps, le module de détermination calcule le couple T$_{corr}$ devant être appliqué par la machine électrique 4. En résultat, le moyen d'actionnement 20 pilote la machine électrique 4 pour que celle-ci délivre le couple T$_{corr}$.

Dans l'exemple illustré, deux seuils respectivement égaux à 10 % et 15 % sont considérés pour la régulation du taux de glissement tx et la correction selon l'invention. On peut sans sortir du cadre de l'invention envisager des valeurs et/ou un nombre de seuils différents.

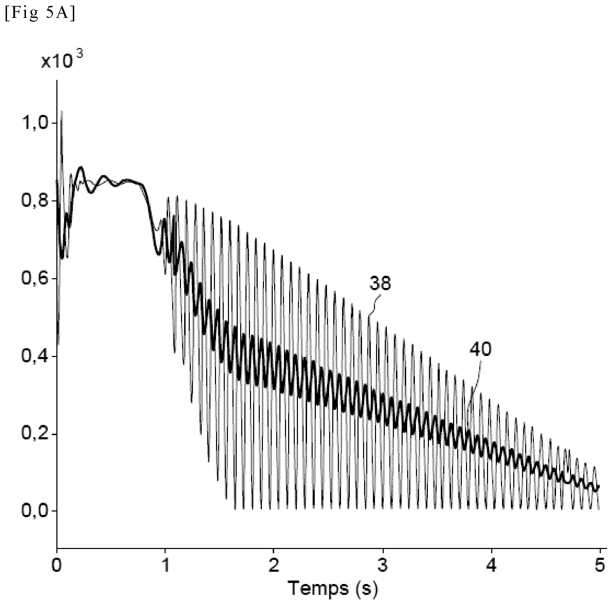

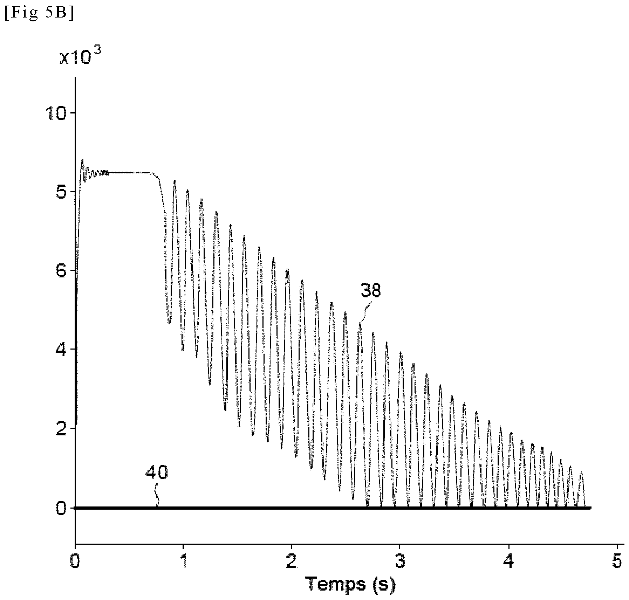

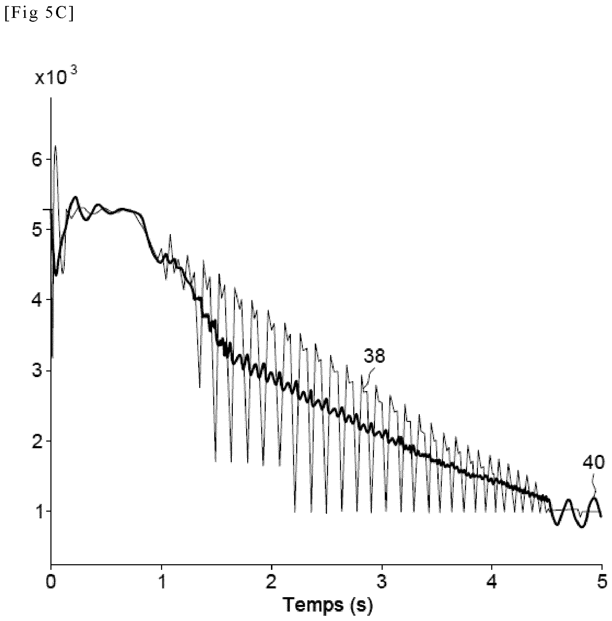

Les figures 5A, 5B et 5C illustrent schématiquement le résultat obtenu grâce à la correction selon l'invention. Sur les figures 5A, 5B et 5C, on a schématiquement représenté par une courbe en traits fins 38 la vitesse de rotation ω$_{roue}$, et par une courbe en traits épais 40 la vitesse de rotation ω$_{me}$.

Sur la figure 5A, aucune correction n'est mise en œuvre pour limiter le déphasage entre les oscillations de la vitesse de rotation ω$_{roue}$ et les oscillations de la vitesse de rotation ω$_{me}$. Il en résulte une résonance importante de la vitesse de rotation ω$_{me}$. Cette résonance correspond à l'inertie de la machine électrique 4 et des roues 10 sur la raideur des transmissions. Ce mode est fortement influencé par la grande inertie de la machine électrique 4 qui peut, dans le cas d'un véhicule à propulsion électrique pure ou à propulsion hybride électrique, être cinq (5) fois supérieure à celle des roues. Cette résonance peut se traduire par un débattement excessif du groupe motopropulseur 2 sur ses suspensions.

En référence à la figure 5B, on a schématiquement représenté un cas théorique dans lequel la machine électrique 4 est virtuellement débrayée. En d'autres termes, la liaison mécanique entre la machine électrique 4 et les roues 10 a été ouverte. Une telle considération est théorique, compte tenu de l'absence d'embrayage entre la machine électrique 4 et les roues 10.

Dans le cas de la figure 5B, la vitesse de rotation ω$_{me}$ n'est plus soumise à des oscillations. La vitesse de rotation ω$_{roue}$ est soumise à des oscillations à une fréquence comprise entre 5 Hz et 8 Hz. La fréquence de résonance est donc plus basse et correspondant à celle d'un système d'antiblocage des roues classique.

En référence à la figure 5C, la machine électrique 4 est pilotée avec le couple de correction T$_{corr}$ déterminé par le module de détermination 18. En résultat, les fluctuations de la vitesse ω$_{me}$, représentées par la courbe 40, sont fortement diminuées par rapport aux fluctuations de la figure 5A.

La correction selon l'invention permet donc d'utiliser le même système physique que dans le cas de la figure 5A avec une compensation dynamique du retard de phase. On obtient ainsi des sollicitations plus faibles en entrée du groupe motopropulseur 2 et sur le véhicule.

L'invention ne se limite pas à l'application d'un couple de correction tel que calculé selon l'équation définie précédemment. En particulier, on pourra sans sortir du cadre de l'invention envisager de calculer le couple T$_{corr}$ en fonction d'une dérivée seconde temporelle de la position angulaire θ$_{me}$ de la machine électrique 4. Dans un tel exemple, le couple correcteur peut être calculé sous la forme :

$$[\text{Math } 5]$$

$$T_{corr} = J_m \times \frac{d^2 \theta_{me}}{dt^2}$$

où J$_m$ est le moment d'inertie équivalent de l'ensemble constitué par le rotor de la machine électrique 4 et par tous les éléments de chaîne cinématique situés entre la machine électrique 4 et l'essieu 8, incluant en particulier les pignons et arbres de la boîte de vitesses 6.

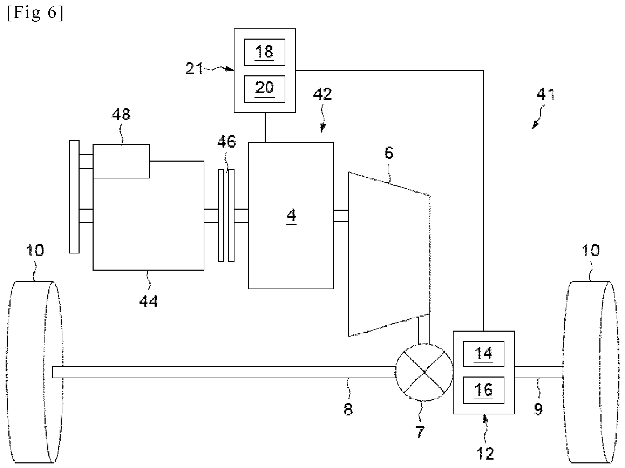

En référence à la figure 6, on a schématiquement représenté un ensemble 41 selon un second mode de réalisation de l'invention. Les éléments identiques portent les mêmes références.

L'ensemble 41 diffère de l'ensemble 1 en ce qu'il comprend un groupe motopropulseur 42 doté, en outre, d'un moteur à combustion interne 44 mécaniquement relié à la machine électrique 4 grâce à un moyen de rupture de couple 46.

En outre, le groupe motopropulseur 42 comporte un alternateur 48 mécaniquement connecté au moteur à combustion interne 44.

Dans ce mode de réalisation, le véhicule automobile est donc à propulsion hybride électrique. Un véhicule à propulsion hybride électrique est un véhicule dont la propulsion est assurée au moins par un moteur électrique d'entraînement. On peut mettre en œuvre, pour le freinage du véhicule, le procédé précité au moyen du dispositif 12.

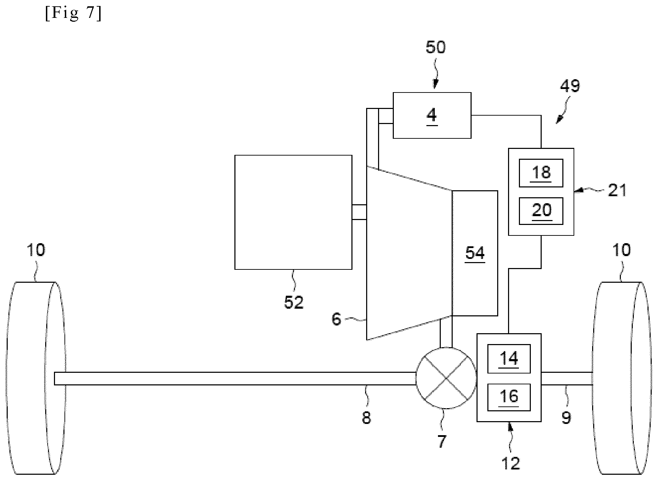

En référence à la figure 7, on a schématiquement représenté un ensemble 49 selon un troisième mode de réalisation de l'invention. Les éléments identiques portent les mêmes références. L'ensemble 49 comprend un groupe motopropulseur 50.

Le groupe motopropulseur 50 diffère du groupe motopropulseur 2 en ce qu'il comporte un moteur à combustion interne 52 mécaniquement connecté avec la boîte de vitesses 6. De la sorte, la boîte de vitesses 6 est à la fois directement mécaniquement connectée avec la machine électrique 4, et directement mécaniquement connectée avec le moteur à combustion interne 52. En outre, le groupe motopropulseur 50 comporte une seconde machine électrique 54 mécaniquement connectée avec la boîte de vitesses 6.

Comme dans le second mode de réalisation, le véhicule automobile est à propulsion hybride électrique et on peut mettre en œuvre, pour le freinage du véhicule, le procédé précité au moyen du dispositif 12.

Dans ce cas, le procédé de freinage selon l'invention peut être mis en œuvre vis-à-vis de l'une des deux machines électriques 4 et 54, ou vis-à-vis des deux machines électriques 4 et 54.

Au vu de ce qui précède, le dispositif de freinage selon l'invention permet de limiter les oscillations de torsion de la chaîne cinématique entre les routes 10 et la machine électrique 4 et/ou 54, et ce dans un véhicule à propulsion électrique pure ou dans un véhicule à propulsion hybride électrique. Il en résulte un débattement moindre du groupe motopropulseur sur ses suspensions, et une limitation du risque de rupture des biellettes, des éléments de suspension du groupe motopropulseur ou encore des éléments de chaîne cinématique.

## Revendications

1. Dispositif de freinage (12) d'un véhicule automobile doté d'une machine électrique (4, 54), comprenant un premier moyen d'actionnement (14) apte à appliquer un couple de freinage sur au moins une roue (10) du véhicule, un module de régulation (16) d'un taux de glissement lié à ladite roue (10), **caractérisé en ce qu'**il comprend un module de détermination (18) apte à déterminer un signal de correction d'un déphasage (30) entre des oscillations de la vitesse de rotation de ladite roue (10) et des oscillations de la vitesse de rotation de la machine électrique (4, 54) et un second moyen d'actionnement (20) apte à piloter la machine électrique (4, 54) avec le signal de correction.

2. Dispositif (12) selon la revendication 1, dans lequel le signal de correction est un couple de correction devant être délivré par la machine électrique (4, 54).

3. Dispositif (12) selon la revendication 2, dans lequel le couple de correction est positif lorsque le couple de freinage est négatif.

4. Dispositif (12) selon la revendication 2 ou 3, dans lequel le couple de correction est sensiblement proportionnel au couple de freinage, un coefficient de proportionnalité liant le couple de freinage et le couple de correction étant de préférence égal à l'opposé d'un rapport de transmission mécanique entre la machine électrique (4, 54) et ladite roue (10).

5. Dispositif (12) selon l'une quelconque des revendications 2 à 4, dans lequel le module de détermination (18) est configuré pour délivrer un couple de correction nul ou convergeant vers zéro (0) lorsqu'aucune régulation du taux de glissement lié à ladite roue (10) n'est mise en œuvre et/ou lorsque le taux de glissement lié à ladite roue (10) est inférieur à un seuil compris entre 10% et 15%.

6. Dispositif (12) selon l'une quelconque des revendications 1 à 5, dans lequel le signal de correction est calculé comme une fonction d'une dérivée seconde temporelle d'une position angulaire de la machine électrique (4, 54), le signal de correction étant de préférence proportionnel à au moins un paramètre choisi parmi un moment d'inertie équivalent d'un ensemble constitué par la machine électrique (4, 54) et par des éléments de chaine cinématique (6, 7) entre la machine électrique (4, 54) et ladite roue (10), et une dérivée seconde temporelle d'une position angulaire de la machine électrique (4, 54).

7. Ensemble de propulsion et freinage (1, 41, 49) pour véhicule automobile comprenant une machine électrique (4, 54) et un dispositif de freinage (12) selon l'une quelconque des revendications 1 à 6.

8. Ensemble (1, 41, 49) selon la revendication 7, comprenant une boîte de vitesses (6) mécaniquement connectée avec la machine électrique (4, 54), l'ensemble (41, 49) comprenant de préférence un moteur à combustion interne (44) mécaniquement connecté à la boîte de vitesses (6).

9. Procédé de freinage d'un véhicule automobile doté d'une machine électrique (4, 54), comprenant l'application d'un couple de freinage sur au moins une roue (10) du véhicule, la régulation d'un taux de glissement lié à ladite roue (10), **caractérisé en ce qu'**il comprend la détermination d'un signal de correction d'un déphasage (30) entre des oscillations de la vitesse de rotation de ladite roue (10) et des oscillations de la vitesse de rotation de la machine électrique (4, 54) et le pilotage de la machine électrique (4, 54) avec le signal de correction.

10. Programme d'ordinateur comprenant un code configuré pour, lorsqu'il est exécuté par un processeur ou une unité de contrôle électronique, mettre en œuvre le procédé selon la revendication 9.

**Patentansprüche**

1. Vorrichtung zum Bremsen (12) eines Kraftfahrzeugs, das mit einer elektrischen Maschine (4, 54) ausgestattet ist, die ein erstes Betätigungsmittel (14) aufweist, das geeignet ist, ein Bremsmoment auf mindestens ein Rad (10) des Fahrzeugs auszuüben, sowie ein Modul (16) zum Regulieren einer mit dem Rad (10) verknüpften Schlupfrate, **dadurch gekennzeichnet, dass** sie ein Bestimmungsmodul (18) aufweist, das geeignet ist, ein Korrektursignal einer Phasenverschiebung (30) zwischen Schwingungen der Drehgeschwindigkeit des Rads (10) und Schwingungen der Drehgeschwindigkeit der elektrischen Maschine (4, 54) zu bestimmen, und ein zweites Betätigungsmittel (20), das geeignet ist, die elektrische Maschine (4, 54) mit dem Korrektursignal anzusteuern.

2. Vorrichtung (12) nach Anspruch 1, wobei das Korrektursignal ein Korrekturmoment ist, das von der elektrischen Maschine (4, 54) abgegeben werden soll.

3. Vorrichtung (12) nach Anspruch 2, wobei das Korrekturmoment positiv ist, wenn das Bremsmoment negativ ist.

4. Vorrichtung (12) nach Anspruch 2 oder 3, wobei das Korrekturmoment im Wesentlichen proportional zum Bremsmoment ist, wobei ein Proportionalitätskoeffizient, der das Bremsmoment und das Korrekturmoment verknüpft, vorzugsweise gleich dem Gegenteil eines mechanischen Übersetzungsverhältnisses zwischen der elektrischen Maschine (4, 54) und dem Rad (10) ist.

5. Vorrichtung (12) nach einem der Ansprüche 2 bis 4, wobei das Bestimmungsmodul (18) so konfiguriert ist, dass es ein Korrekturmoment von Null oder gegen Null (0) konvergierend ausgibt, wenn keine Regelung der mit dem Rad (10) verknüpften Schlupfrate angewendet wird und/oder wenn die mit dem Rad (10) verknüpften Schlupfrate unter einem Schwellenwert zwischen 10 % und 15 % liegt.

6. Vorrichtung (12) nach einem der Ansprüche 1 bis 5, wobei das Korrektursignal als eine Funktion einer zeitlichen zweiten Ableitung einer Winkelposition der elektrischen Maschine (4, 54) berechnet wird, wobei das Korrektursignal vorzugsweise proportional zu mindestens einem Parameter ist, der aus einem äquivalenten Trägheitsmoment einer Baugruppe, die aus der elektrischen Maschine (4, 54) und aus Elementen der kinematischen Kette (6, 7) zwischen der elektrischen Maschine (4, 54) und dem Rad (10) besteht, und einer zeitlichen zweiten Ableitung einer Winkelposition der elektrischen Maschine (4, 54) ausgewählt ist.

7. Antriebs- und Bremsbaugruppe (1, 41, 49) für ein Kraftfahrzeug mit einer elektrischen Maschine (4, 54) und einer Bremsvorrichtung (12) nach einem der Ansprüche 1 bis 6.

8. Baugruppe (1, 41, 49) nach Anspruch 7, die ein Getriebe (6) aufweist, das mechanisch mit der elektrischen Maschine (4, 54) verbunden ist, wobei die Baugruppe (41, 49) vorzugsweise einen Verbrennungsmotor (44) aufweist, der mechanisch mit dem Getriebe (6) verbunden ist.

9. Verfahren zum Bremsen eines Kraftfahrzeugs, das mit einer elektrischen Maschine (4, 54) ausgestattet ist, und das das Aufbringen eines Bremsmoments auf mindestens ein Rad (10) des Fahrzeugs aufweist, sowie das Regulieren einer mit dem Rad (10) verknüpften Schlupfrate, **dadurch gekennzeichnet, dass** es das Bestimmen eines Korrektursignals einer Phasenverschiebung (30) zwischen Schwingungen der Drehgeschwindigkeit des Rads (10) und Schwingungen der Drehgeschwindigkeit der elektrischen Maschine (4, 54) und das Ansteuern der elektrischen Maschine (4, 54) mit dem Korrektursignal aufweist.

10. Computerprogramm mit einem Code, der so konfiguriert ist, dass er, wenn er von einem Prozessor oder einer elektronischen Steuereinheit ausgeführt wird, das Verfahren nach Anspruch 9 implementiert.

**Claims**

1. Braking device (12) of a motor vehicle equipped with an electric machine (4, 54), comprising first actuating means (14) capable of applying a braking torque to at least one wheel (10) of the vehicle, and a module (16) for regulating a slip rate related to said wheel (10), **characterized in that** it comprises a determination module (18) capable of determining a correction signal for correcting a phase shift (30) between oscillations of the rotational speed of said wheel (10) and oscillations of the rotational speed of the electric machine (4, 54) and second actuating means (20) capable of controlling the electric machine (4, 54) using the correction signal.

2. Device (12) according to Claim 1, wherein the correction signal is a correction torque to be delivered by the electric machine (4, 54).

3. Device (12) according to Claim 2, wherein the correction torque is positive when the braking torque is negative.

4. Device (12) according to Claim 2 or 3, wherein the correction torque is substantially proportional to the braking torque, a coefficient of proportionality between the braking torque and the correction torque preferably being equal to the opposite of a mechanical transmission ratio between the electric machine (4, 54) and said wheel (10).

5. Device (12) according to any one of Claims 2 to 4, wherein the determination module (18) is configured to deliver a correction torque of zero or converging towards zero (0) when the slip rate related to said wheel (10) is not being regulated and/or when the slip rate related to said wheel (10) is less than a threshold of between 10% and 15%.

6. Device (12) according to any one of Claims 1 to 5, wherein the correction signal is calculated as a function of a second time derivative of an angular position of the electric machine (4, 54), the correction signal preferably being proportional to at least one parameter selected from an equivalent moment of inertia of an assembly consisting of the electric machine (4, 54) and driveline elements (6, 7) between the electric machine (4, 54) and said wheel (10), and a second time derivative of an angular position of the electric machine (4, 54).

7. Propulsion and braking assembly (1, 41, 49) for a motor vehicle comprising an electric machine (4, 54) and a braking device (12) according to any one of Claims 1 to 6.

8. Assembly (1, 41, 49) according to Claim 7, comprising a gearbox (6) mechanically connected to the electric machine (4, 54), the assembly (41, 49) preferably comprising an internal-combustion engine (44) mechanically connected to the gearbox (6).

9. Method for braking a motor vehicle equipped with an electric machine (4, 54), comprising applying a braking torque to at least one wheel (10) of the vehicle, and regulating a slip rate related to said wheel (10), **characterized in that** it comprises determining a correction signal for correcting a phase shift (30) between oscillations of the rotational speed of said wheel (10) and oscillations of the rotational speed of the electric machine (4, 54) and controlling the electric machine (4, 54) using the correction signal.

10. Computer program comprising code configured to implement, when executed by a processor or an electronic control unit, the method according to Claim 9.

[Fig 1]

[Fig 2]

[Fig 3]

[Fig 4]

[Fig 5A]

[Fig 5B]

[Fig 5C]

[Fig 6]

[Fig 7]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006025905 A1

- US 2012262102 A1